# FASCICULE DE BREVET EUROPEEN

(11) **EP 1 273 810 B1**
(45) Date de publication et mention de la délivrance du brevet: **12.09.2007**
(21) Numéro de dépôt: 02291652.2
(22) Date de dépôt: 02.07.2002
(51) Int. Cl.: F16B 37/04

(54) **Agrafe de fixation à montage aveugle et procédé de mise en oeuvre**
Blinde Befestigungsklammer und Verfahren zur Montage
Blind fastening clip and method of instalation

(30) Priorité: 05.07.2001 FR 0108943
(43) Date de publication de la demande: 08.01.2003
(73) Titulaire: Lisi Automotive Rapid, 95650 Puiseux Pontoise (FR)
(72) Inventeur: Leon, Jean Pierre René, 78800 Houilles (FR); Da Costa, Serge Manuel, 95400 Villiers Le Bel (FR); Perol, Rodolphe Dominique Gilles, 75015 Paris (FR)
(74) Mandataire: Berger, Helmut

(56) Documents cités:
- US-A- 2 562 002
- US-A- 2 719 558

## Description

La présente invention concerne un dispositif de fixation du type décrit dans le préambule de la revendication 1 et un procédé de mise en oeuvre de ce dispositif.
Des dispositifs de fixation de ce type, en général utilisées pour permettre d'assujettir rapidement une pièce à une paroi métallique, sont connues dans le document US256002.
L'inconvénient de ce type de dispositifs réside dans le fait qu'ils nécessitent une accessibilité des deux côtés de la paroi sur laquelle se fixent les dispositifs.
La présente invention, a pour but de pallier cet inconvénient.
A cette fin, le dispositif de fixation et le procédé comportent les caractéristiques énoncées dans les parties caractérisantes des revendications 1 et 10 respectivement.
D'autres caractéristiques de l'invention sont indiquées dans les revendications dépendantes.

Puisque lors du montage, on fait passer la branche porteuse de l'écrou à travers la lumière dans le paroi à l'état monté, cet écrou se trouve non pas sur la face accessible, mais sur l'autre face qui pourrait être cachée. Par conséquence, seulement le bouton est visible.

Le montage de cette agrafe n'engendre aucune agression sensible de la paroi qui la reçoit, de sorte qu'il peut être envisagé sur des parois peintes.

Après son montage, l'agrafe peut coulisser à l'intérieur de la lumière dans le plan de la paroi, la possibilité ainsi offerte de choisir l'emplacement définitif de l'agrafe sur la paroi permettant de compenser toutes les tolérances de fabrication susceptibles d'influer sur la localisation de cet emplacement définitif.

Enfin, dans la mesure où la structure de cette agrafe n'est pas spécifiquement conçue pour l'utilisation d'un écrou et d'une vis en tant qu'éléments de liaison, tout autre type d'éléments de liaison peut être envisagé, tel par exemple qu'un pion et un oeillet s'assemblant par une rotation d'un quart de tour.

D'autres caractéristiques et avantages de l'invention ressortiront clairement de la description qui en est faite ci-après en référence aux dessins annexés, dans lesquels:
- la Figure 1 est une vue de dessus d'une agrafe conforme à un premier mode de réalisation de l'invention, c'est-à-dire une vue en plan de cette agrafe observée du côté de sa première branche;
- la Figure 2 est une vue de dessous de l'agrafe illustrée à la figure 1, c'est-à-dire une vue en plan de cette agrafe observée du côté de sa seconde branche;
- les Figures 3 à 7 sont des vues latérales de l'agrafe illustrée à la figure 1, représentant les phases successives de montage de cette agrafe dans une lumière d'une paroi;
- la Figure 8 est une vue en perspective d'une agrafe conforme au premier mode de réalisation de l'invention, observée depuis un point dominant sa première branche;
- la Figure 9 est une vue en perspective de l'agrafe illustrée à la figure 8, observée depuis un point dominant sa seconde branche;
- la Figure 10 est une vue en bout de l'agrafe illustrée à la figure 8, observée du côté du repli commun aux deux branches;
- la Figure 11 est une vue en perspective d'une agrafe conforme à un seconde mode de réalisation de l'invention;
- la Figure 12 est une vue en perspective d'un pion constituant un second élément de liaison pour l'agrafe illustrée à la figure 11;
- la Figure 13 est une vue en perspective de l'agrafe illustrée à la figure 11, équipée du pion de la figure 12 et observée depuis un point dominant sa première branche; et
- la Figure 14 est une vue en perspective de l'agrafe illustrée aux figures 11 et 13, équipée du pion de la figure 12 et observée depuis un point dominant sa seconde branche.

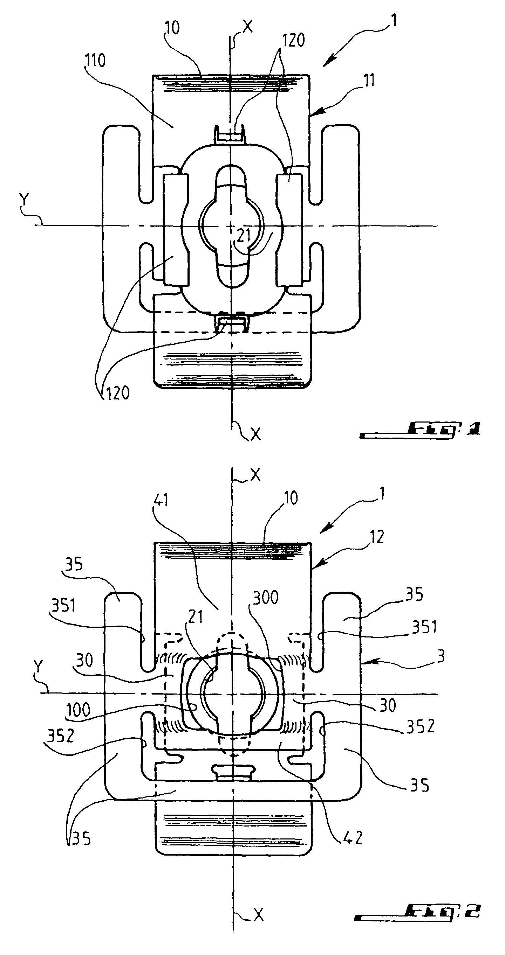

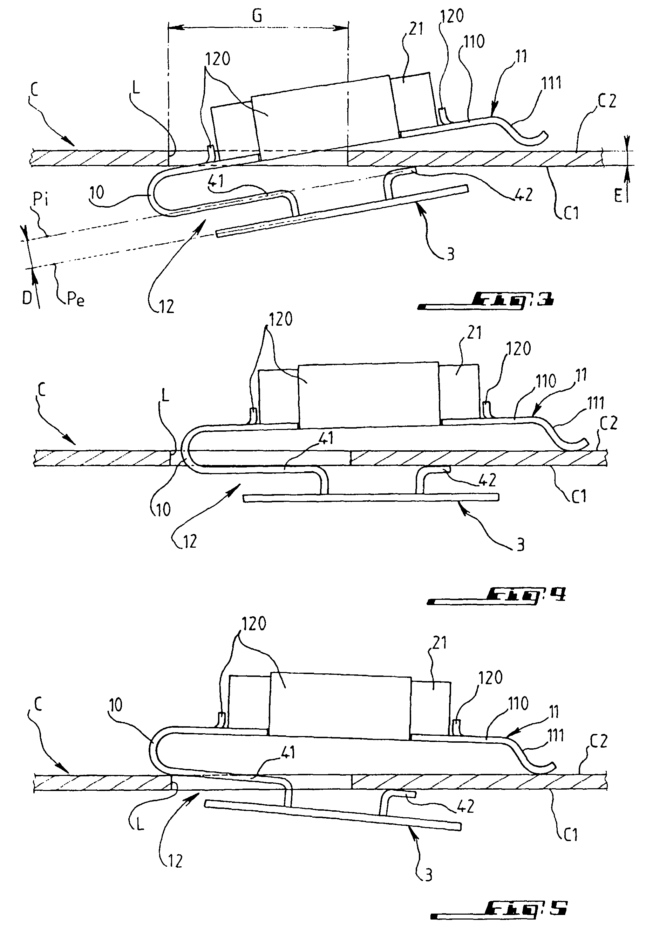

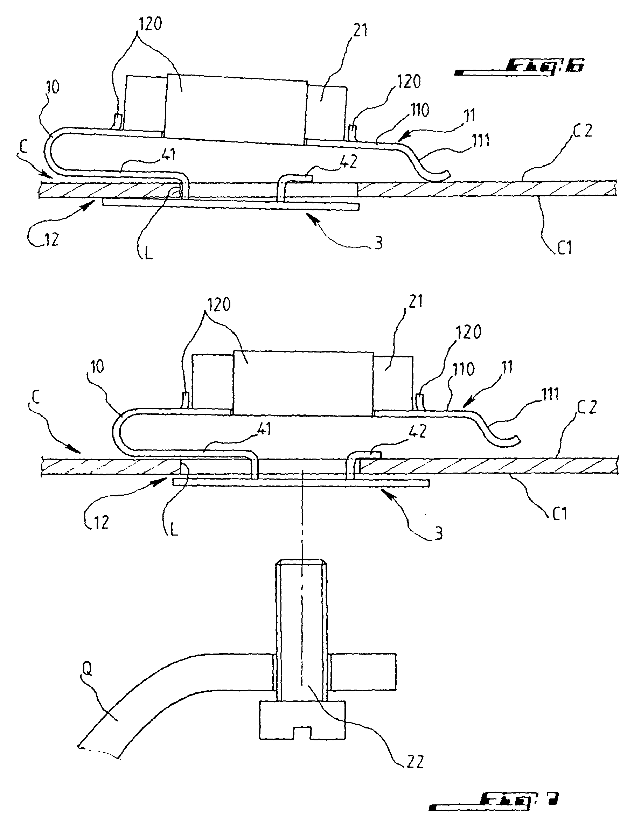

Comme annoncé précédemment, l'invention concerne une agrafe de fixation 1, destinée à être accrochée à une paroi C de faible épaisseur E (figure 3) par insertion dans une lumière L de cette paroi C.

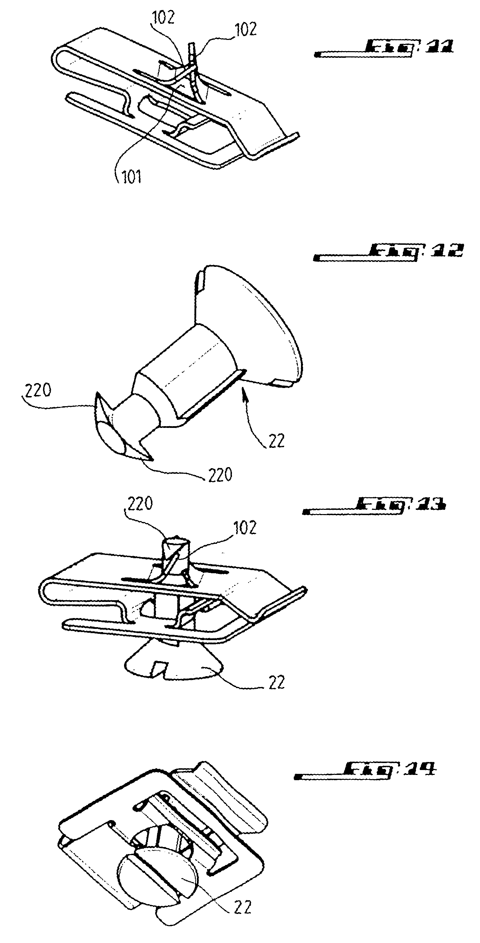

Cette agrafe porte un élément de liaison 21, tel qu'un écrou, qui lui est solidaire (figure 1), et qui est destiné à coopérer avec un élément de liaison amovible 22, tel qu'une vis (figure 7).

Comme le montrent clairement les figures 3 à 5 par exemple, cette agrafe 1 est essentiellement formée d'une pince élastique à deux branches plates 11 et 12.

Les branches 11 et 12 sont élastiquement reliées l'une à l'autre par un repli commun 10 et s'étendent, à partir de ce repli 10, le long d'un même axe longitudinal X.

La structure de l'agrafe selon l'invention est définie par une pluralité de caractéristiques.

Tout d'abord, l'élément de liaison embarqué 21 est porté par une section médiane de la branche 11 de l'agrafe, c'est-à-dire à l'écart des extrémités de cette branche 11 le long de l'axe longitudinal X.

D'autre part, l'autre branche de l'agrafe, référencée 12, est plus courte que la branche 11 qui porte l'élément de liaison 21.

Enfin, comme le montrent les figures 3 à 7, la branche courte 12 forme un bouton 3 et deux rabats 41 et 42.

Le bouton 3 présente avantageusement une zone centrale 30 et une zone périphérique 35, la zone centrale 30 présentant un perçage 300 en regard de l'élément de liaison embarqué 21.

La zone centrale 30 et la zone périphérique 35 s'étendent toutes les deux dans un plan d'appui externe Pe, qui est relativement éloigné de la branche longue 11 de l'agrafe.

Les rabats 41 et 42 s'étendent dans un plan intermédiaire Pi entre le plan d'appui externe Pe et la branche longue 11.

Ces rabats sont par ailleurs disposés, suivant l'axe longitudinal X, de part et d'autre de la zone centrale 30 du bouton 3, à laquelle ils sont reliés.

La zone périphérique 35 du bouton 3 est reliée à la zone centrale 30, et séparée des rabats 41 et 42 par des découpes respectives référencées 351 et 352.

La zone périphérique 35 présente de préférence une forme enveloppante en U, de même que la découpe 352 qui sépare cette zone périphérique 35 du rabat 42 le plus éloigné du repli commun 10.

De cette manière, la zone périphérique 35 entoure au moins partiellement la zone centrale 30, à la fois suivant l'axe longitudinal X et suivant l'axe transversal Y, perpendiculaire à l'axe X.

Comme le montre la figure 3, le plan intermédiaire Pi dans lequel s'étendent les rabats 41 et 42 est séparé du plan d'appui externe Pe par une distance D au moins égale à l'épaisseur E de la paroi C.

Dans un mode de réalisation permettant la fabrication en grande série, les branches 11 et 12 de l'agrafe et leur repli commun 10 sont avantageusement formés en une seule pièce par découpage, pliage et trempe d'un flan métallique, selon des techniques connues de l'homme de l'art.

L'élément de liaison embarqué 21 peut être constitué par une pièce rapportée sur la branche longue 11 de l'agrafe, comme le montrent les figures 1 à 10, ou être lui-même réalisé par une conformation particulière de cette branche 11, comme le montrent les figures 11, 13, et 14.

Dans le premier cas (figures 1 à 10), l'élément de liaison embarqué 21 est de préférence porté par la face 110 de la branche longue 11 qui est tournée à l'opposé de la branche courte 12, la branche longue 11 présentant un perçage 100 en regard de l'élément de liaison embarqué 21.

Si par ailleurs les branches 11 et 12 de l'agrafe et leur repli commun 10 sont formés à partir d'un flan métallique, ce dernier peut être découpé et plié pour former une cage 120 enserrant l'élément de liaison embarqué 21, par exemple constitué par un écrou.

Dans le second cas (figures 11 à 14), l'élément de liaison embarqué 21 prend par exemple la forme d'un pas de vis ou d'un perçage 101 bordé de rampes hélicoïdales 102, formées dans le flan métallique lui-même.

Enfin, l'extrémité libre 111 de la branche longue 11 est très avantageusement recourbée en direction du plan intermédiaire Pi, jusqu'à affleurer ou traverser ce plan intermédiaire Pi.

L'agrafe ainsi constituée est utilisée et mise en oeuvre de la façon suivante.

Comme mentionné précédemment, cette agrafe est destinée à venir se fixer de façon amovible sur une paroi C de faible épaisseur E.

Cette paroi doit présenter au moins une face accessible C1, l'autre face C2 pouvant éventuellement rester hors d'atteinte pour un opérateur.

La paroi C est par ailleurs percée d'une lumière L par exemple rectangulaire, dont la longueur et / ou la largeur G est plus courte que la longueur de la branche courte 12 de l'agrafe 1.

La première opération, dont le résultat est illustré à la figure 3, consiste à introduire l'extrémité libre 111 de la première branche 11 de l'agrafe dans la lumière L, à partir de la face accessible C1 de la paroi, en alignant sensiblement l'axe longitudinal X de l'agrafe sur la dimension G de la lumière L.

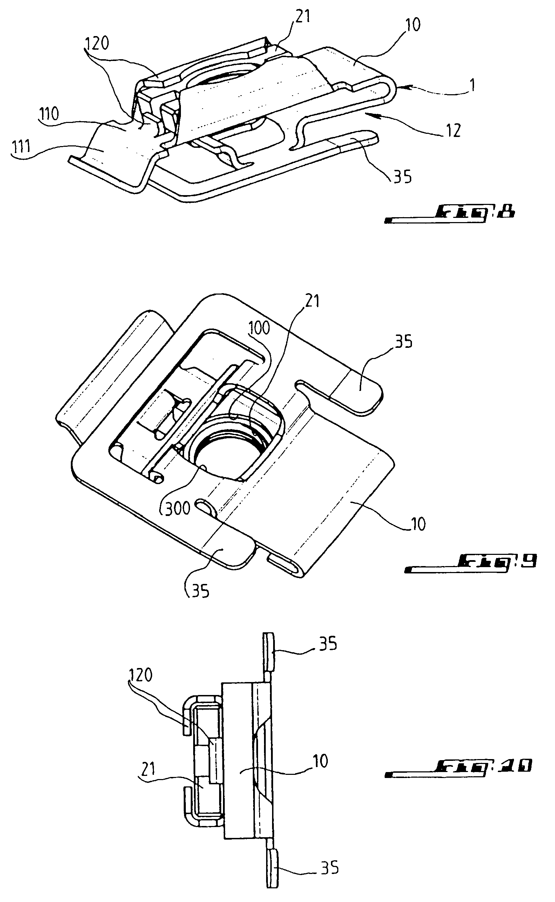

La seconde opération, dont le résultat est illustré à la figure 4, consiste à déplacer l'agrafe 1 suivant son axe longitudinal X, en direction de l'extrémité libre 111 de la branche longue 11, jusqu'à ce que le repli 10 commun aux branches 11 et 12 se trouve en regard de la lumière L.

La troisième opération consiste à exercer sur l'agrafe une force transversale par rapport à la paroi C de manière à faire passer le repli 10 du côté de la seconde face C2 de la paroi, puis à déplacer l'agrafe 1 suivant son axe longitudinal X, en direction du repli 10.

La figure 5 illustre le résultat de cette opération, après un déplacement de l'agrafe suffisant pour faire passer le repli 10 du côté de la face C2 de la paroi C.

Le déplacement de l'agrafe 1 suivant son axe longitudinal X, en direction du repli 10 est ensuite poursuivi jusqu'à ce que le rabat 42 traverse la lumière L, la position en résultant étant illustrée à la figure 6.

Ensuite, l'agrafe peut, si nécessaire, être déplacée longitudinalement en direction de l'extrémité libre 111 de la branche longue 11, de manière à prendre la position illustrée à la figure 7, dans laquelle la cloison C est prise en épaisseur entre chacun des rabats 41 et 42 et le bouton 3.

Dès qu'elle a atteint la position qu'illustre la figure 6, ou celle qu'illustre la figure 7, l'agrafe est prête à permettre la fixation, sur la cloison C, d'une pièce quelconque Q (figure 7), à laquelle est lié l'élément de liaison amovible 22, par exemple constitué par une vis.

Cette fixation est obtenue en engageant l'élément de liaison amovible 22 dans l'élément de liaison embarqué 21 jusqu'à ce que ces éléments coopèrent pour assurer leur maintien mutuel.

Pour ce faire, l'élément de liaison amovible 22, par exemple la vis, est donc engagée, à partir de la face accessible C1 de la paroi C, au travers du perçage 300 de la zone centrale 30 du bouton 3 de l'agrafe, au travers de la lumière L, et éventuellement au travers du perçage 100 de la branche longue 11, jusqu'à atteindre l'élément de liaison embarqué 21, avec lequel il se solidarise.

Dans le mode de réalisation illustré aux figures 11 à 14, l'élément de liaison embarqué est formé par un perçage 101 pratiqué dans le flan métallique et bordé de rampes hélicoïdales 102, tandis que l'élément de liaison amovible 22 est constitué par un pion terminé par des ergots radiaux 220 coopérant avec les rampes hélicoïdales 102.

Dans ce cas, la fixation est obtenue en engageant le pion 22 dans le perçage 300 de la zone centrale 30 du bouton 3 de l'agrafe, dans la lumière L, et dans le perçage 101 de la branche longue 11, jusqu'entre les rampes hélicoïdales 102, puis en imprimant au pion 22 une rotation d'un quart de tour.

## Revendications

1. Dispositif de fixation comprenant une agrafe (1) et une paroi (C) de faible épaisseur (E), présentant deux faces (C1, C2) dont la première (C1) au moins est accessible et pourvue d'une lumière (L), l'agrafe (1) destinée à être accrochée par insertion dans la lumière (L) porte un premier élément de liaison (21), tel qu'un écrou, destiné à coopérer avec un second élément de liaison (22), tel qu'une vis, et est essentiellement formée d'une pince élastique à deux branches plates (11, 12) s'étendant le long d'un même axe longitudinal (X) à partir d'un repli commun (10) qui les relie élastiquement, à l'état monté sur la paroi de l'agrafe, la première branche (11) porteuse de l'élément de liaison (21) se trouve sur un côté (C2) de la paroi (C) tandis que la seconde branche (12) est située de l'autre côté (C1) de la paroi, **caractérisé en ce que** la première branche (11) porteuse de l'élément de liaison (21) est dimensionnée de façon à pouvoir être passée à travers la lumière (L), tandis que la seconde branche (12) forme un bouton (3) et deux rabats (41, 42), le bouton (3) prenant appui sur l'autre côté (C1) de la paroi (C), autour de la lumière (L).

2. Dispositif de fixation suivant la revendication 1, **caractérisé en ce que** le bouton (3) présente une zone centrale (30) et une zone périphérique (35) s'étendant toutes les deux dans un plan d'appui externe (Pe) relativement éloigné de la première branche (11), la zone centrale (30) présentant un perçage (300) en regard du premier élément de liaison (21), **en ce que** les deux rabats (41, 42) s'étendent dans un plan intermédiaire (Pi) entre le plan d'appui externe (Pe) et la première branche (11), et sont disposés, suivant l'axe longitudinal (X), de part et d'autre de la zone centrale (30) du bouton (3) à laquelle ils sont reliés, les premier et second rabats (41, 42) étant respectivement plus proche et plus éloigné du repli commun (10), **en ce que** la zone périphérique (35) est reliée à la zone centrale (30) et séparée des rabats (41, 42) par des découpes respectives (351, 352), **en ce que** la zone périphérique (35) entoure la zone centrale (30), au moins partiellement, à la fois suivant l'axe longitudinal (X) et suivant un axe transversal (Y), et **en ce que** le plan intermédiaire (Pi) est séparé du plan d'appui externe (Pe) par une distance (D) au moins égale à l'épaisseur (E) de la paroi (C).

3. Dispositif de fixation suivant la revendication 2, **caractérisé en ce que** la zone périphérique (35) présente une forme enveloppante en U, et **en ce que** la découpe (352) séparant cette zone périphérique (35) du second rabat (42) présente également une forme en U.

4. Dispositif de fixation suivant l'une quelconque des revendications précédentes, **caractérisé en ce que** les première et seconde branches (11, 12) et leur repli commun (10) sont formés en une seule pièce par découpage, pliage et trempe d'un flan métallique.

5. Dispositif de fixation suivant la revendication 4, **caractérisé en ce que** le premier élément de liaison (21) est constitué par une pièce rapportée sur la première branche (11).

6. Dispositif de fixation suivant la revendication 5, **caractérisé en ce que** le premier élément de liaison (21) est porté par une face (110) de la première branche (11) tournée à l'opposé de la seconde branche (12), et **en ce que** cette première branche (11) présente un perçage (100) en regard du premier élément de liaison (21).

7. Dispositif de fixation suivant l'une quelconque des revendications 5 et 6, **caractérisé en ce que** le flan métallique est découpé et plié pour former une cage (120) enserrant le premier élément de liaison (21).

8. Dispositif de fixation suivant l'une quelconque des revendications précédentes combinée à la revendication 2, **caractérisé en ce que** la première branche (11) présente une extrémité libre (111) recourbée en direction du plan intermédiaire (Pi).

9. Dispositif de fixation suivant la revendication 8 **caractérisé en ce que** l'extrémité libre (111) de la première branche (11) affleure ou traverse le plan intermédiaire (Pi).

10. Procédé de mise en oeuvre d'un dispositif suivant l'une quelconque des revendications précédentes, **caractérisé en ce qu'**il comprend les opérations consistant à prévoir, dans une paroi (C) de faible épaisseur (E) et présentant deux faces (C1, C2) dont la première (C1) au moins est accessible, une lumière (L) dont au moins une première dimension (G) est plus courte que la seconde branche (12) de l'agrafe (1), à introduire l'extrémité libre (111) de la première branche (11) de l'agrafe dans la lumière (L), à partir de la première face (C1) de la paroi, en alignant sensiblement l'axe longitudinal (X) de l'agrafe sur la première dimension (G) de la lumière (L), à déplacer l'agrafe (1) suivant son axe longitudinal (X), en direction de l'extrémité libre (111) de la première branche (11), jusqu'à ce que le repli (10) commun aux branches (11, 12) se trouve en regard de la lumière (L), à exercer sur l'agrafe une force transversale par rapport à la paroi (C) de manière à faire passer le repli (10) du côté de la seconde face (C2) de la paroi, et à déplacer l'agrafe (1) suivant son axe longitudinal (X), en direction du repli (10), jusqu'à ce que le second rabat (42) traverse la lumière (L).

11. Procédé suivant la revendication 10, **caractérisé en ce qu'**il comprend en outre les opérations consistant à lier le second élément de liaison (22) à une pièce (Q) à fixer sur la paroi (C), et à engager le second élément de liaison (22), à partir de la première face (C1) de la paroi (C), au travers du perçage (300) de la zone centrale (30) du bouton (3) de l'agrafe et au travers de la lumière (L), jusque dans le premier élément de liaison (21), avec lequel il se solidarise.

## Claims

1. Fastening device comprising a clip (1) and a plate (C) of low thickness (E), with two faces (C1, C2), the first of which (C1) at least is accessible and has an opening (L); the clip (1) intended to be attached by insertion into the opening (L) has an initial connecting device (21), such as a nut, intended to work in conjunction with a second connecting device (22), such as a bolt, and is essentially comprised of an elastic clamp with two flat legs (11, 12) extending along the same longitudinal axis (X) from a common bend (10) which links them elastically; in the assembled state on the clip plate, the first leg (11) supporting the connecting device (21) is on one face (C2) of the plate (C) whilst the second leg (12) is situated on the other face (C) of the plate, the device **characterised in that** the first leg (11) supporting the connecting device (21) is designed to pass through the opening (L), whilst the second leg (12) forms a button (3) and two lugs (41, 42), the button (3) resting on the other face (C1) of the plate (C), around the opening (L).

2. Fastening device in accordance with claim 1, **characterised in that** the button (3) has a central zone (30) and a peripheral zone (35) both extending in an external base plane (Pe) relatively distant from the first leg (11), the central zone (30) having a hole (300) facing the initial connecting device (21), and both lugs (41, 42) extending in an intermediate plane (Pi) between the external base plane (Pe) and the first leg (11), being located, in accordance with the longitudinal axis (X), either side of the central zone (30) of the button (3) to which they are connected, the first and second lugs (41, 42) being respectively closer to and further from the common bend (10), and with the peripheral zone (35) connected to the central zone (30) and separated from the lugs (41, 42) by the respective slots (351, 352), with the peripheral zone (35) surrounding the central zone (30), at least partially, following both the longitudinal axis (X) and a transverse axis (Y), and with the intermediate plane (Pi) separated from the external base plane (Pe) by a distance (D) at least equal to the thickness (E) of the plate (C).

3. Fastening device in accordance with claim 2, **characterised in that** the peripheral zone (35) has an enveloping U-shape, and the slot (352) separating this peripheral zone (35) from the second lug (42) is also U-shaped.

4. Fastening device in accordance with any of the preceding claims, **characterised in that** the first and second legs (11, 12) and their common bend (10) are formed from a single piece by cutting, bending and tempering a metal blank.

5. Fastening device in accordance with claim 4, **characterised in that** the initial connecting device (21) comprises a piece added onto the first leg (11).

6. Fastening device in accordance with claim 5, **characterised in that** the initial connecting device (21) is supported by one face (110) of the first leg (11) turned opposite to the second leg (12), and this first leg (11) has a hole (100) facing the initial connecting device (21).

7. Fastening device in accordance with either claim 5 or 6, **characterised in that** the metal blank is cut and bent to form a housing (120), which grips the initial connecting device (21).

8. Fastening device in accordance with any of the preceding claims combined with claim 2, **characterised in that** the first leg (11) has a free end (111) bent in the direction of the intermediate plane (Pi).

9. Fastening device in accordance with claim 8, **characterised in that** the free end (111) of the first leg (11) is flush with or crosses the intermediate plane (Pi).

10. Method of installation of a clip device in accordance with any of the preceding claims, **characterised in that** this comprises operations consisting of providing, in a plate (C) of low thickness (E) with two faces (C1, C2) the first of which (C1) at least is accessible, an opening (L) of which the first dimension (G) at least is shorter than the second leg (12) of the clip (1), of introducing the free end (111) of the first leg (11) of the clip into the opening (L), from the first face (C1) of the plate, aligning the longitudinal axis (X) of the clip over the first dimension (G) of the opening (L), moving the clip (1) along its longitudinal axis (X), in the direction of the free end (111) of the first leg (11), until the bend (10) common to the legs (11, 12) is facing the opening (L), exerting on the clip a transverse force in relation to the plate (C) so as to move the bend (10) through to the second face (C2) of the plate, and moving the clip (1) along its longitudinal axis (X), in the direction of the bend (10), until the second lug (42) passes through the opening (L).

11. Method in accordance with claim 10, **characterised in that** it also includes operations consisting of fixing the second connecting device (22) to a part (Q) to be fixed to the plate (C) and engaging the second connecting device (22), from the first face (C1) of the plate (C), through the hole (300) in the central zone (30) of the button (3) of the clip and through the opening (L), into the initial connecting device (21), into which it locks.

## Patentansprüche

1. Befestigungsvorrichtung umfassend eine Klammer (1) und eine Wand (C) geringer Dicke (E), die zwei Flächen (C1, C2) aufweist, wobei mindestens die erste (C1) zugänglich und mit einer Öffnung (L) versehen ist, die Klammer (1), die zur Befestigung durch Einführen in die Öffnung (L) bestimmt ist, trägt ein erstes Verbindungselement (21), wie eine Schraubenmutter, das dazu bestimmt ist, mit einem zweiten Verbindungselement (22), wie eine Schraube, zusammenzuwirken und das hauptsächlich aus einer elastischen Klammer mit zwei flachen Ästen (11, 12) gebildet ist, die sich entlang einer gleichen Längsachse (X) ausgehend von einer gemeinsamen Falte (10), die sie elastisch verbindet, erstrecken, ist die Klammer auf die Wand montiert, befindet sich der erste Ast (11), der das Verbindungselement (21) trägt, auf einer Seite (C2) der Wand (C), während sich der zweite Ast (12) auf der anderen Seite (C1) der Wand befindet, **dadurch gekennzeichnet, dass** der erste Ast (11), der das Verbindungselement (21) trägt, derart abgemessen ist, dass er durch die Öffnung (L) hindurch geführt werden kann, während der zweite Ast (12) einen Knopf (3) und zwei Laschen (41, 42) bildet, wobei sich der Knopf (3) auf der anderen Seite (C1) der Wand (C) um die Öffnung (L) gabelt.

2. Befestigungsvorrichtung nach Anspruch 1, **dadurch gekennzeichnet, dass** der Knopf (3) einen Mittelbereich (30) und einen Außenbereich (35) aufweist, die sich beide in einer äußeren Stützebene (Pe) erstrecken, die relativ entfernt von dem ersten Ast (11) ist, wobei der Mittelbereich (30) gegenüber des ersten Verbindungselements (21) eine Bohrung (300) aufweist, **dadurch**, dass die beiden Laschen (41, 42) sich in einer Zwischenebene (Pi) zwischen der äußeren Stützebene (Pe) und dem ersten Ast (11) erstrecken und entlang der Längsachse (X) auf beiden Seiten des Mittelbereichs (30) des Knopfs (3), mit dem sie verbunden sind, angeordnet sind, wobei die ersten und zweiten Laschen (41, 42) näher bzw. entfernter von der gemeinsamen Falte (10) sind, **dadurch**, dass der Außenbereich (35) mit dem Mittelbereich (30) verbunden ist und von den Laschen (41, 42) jeweils durch Buchten (351, 352) getrennt ist, **dadurch**, dass der Außenbereich (35) den Mittelbereich (30) mindestens teilweise umgibt, wobei er zugleich der Längsachse (X) und einer Querachse (Y) folgt, und **dadurch**, dass die Zwischenebene (Pi) von der äußeren Stützebene (Pe) durch einen Abstand (D) getrennt ist, der mindestens der Dicke (E) der Wand (C) entspricht.

3. Befestigungsvorrichtung nach Anspruch 2, **dadurch gekennzeichnet, dass** der Außenbereich (35) eine U-förmige Umfangsform aufweist, und **dadurch**, dass die Bucht (352), die diesen Außenbereich (35) von der zweiten Lasche (42) trennt, ebenfalls eine U-Form aufweist.

4. Befestigungsvorrichtung nach einem der vorstehenden Ansprüche, **dadurch gekennzeichnet, dass** die ersten und zweiten Äste (11, 12) und ihre gemeinsame Falte (10) durch Zerschneiden, Falten und Härten eines Metallplättchens aus einem einzigen Stück geformt sind.

5. Befestigungsvorrichtung nach Anspruch 4, **dadurch gekennzeichnet, dass** das erste Verbindungselement (21) aus einem auf den ersten Ast (11) aufgebrachten Stück besteht.

6. Befestigungsvorrichtung nach Anspruch 5, **dadurch gekennzeichnet, dass** das erste Verbindungselement (21) durch eine Fläche (110) des ersten Asts (11) getragen wird, der dem zweiten Ast (12) gegenüber gedreht ist, und **dadurch**, dass dieser erste Ast (11) gegenüber des ersten Verbindungselements (21) eine Bohrung (100) aufweist.

7. Befestigungsvorrichtung nach einem der Ansprüche 5 und 6, **dadurch gekennzeichnet, dass** das Metallplättchen zugeschnitten und so gebogen ist, dass es einen Käfig (120) bildet, der das erste Verbindungselement (21) umschließt.

8. Befestigungsvorrichtung nach einem der vorstehenden Ansprüche kombiniert mit Anspruch 2, **dadurch gekennzeichnet, dass** der erste Ast (11) ein freies Endstück (111) aufweist, das in Richtung der Zwischenebene (Pi) gebogen ist.

9. Befestigungsvorrichtung nach Anspruch 8, **dadurch gekennzeichnet, dass** das freie Endstück (111) des ersten Asts (11) die Zwischenebene (Pi) leicht berührt oder durchdringt.

10. Verfahren zur Anwendung einer Vorrichtung nach einem der vorstehenden Ansprüche, **dadurch gekennzeichnet, dass** es die Arbeitsvorgänge umfasst, die darin bestehen, in einer Wand (C) mit geringer Dicke (E) und die zwei Flächen (C1, C2) aufweist, von denen mindestens die erste (C1) zugänglich ist, eine Öffnung (L) vorzusehen, wobei mindestens eine erste Abmessung (G) kürzer ist als der zweite Ast (12) der Klammer (1), um, ausgehend von der ersten Fläche (C1) der Wand, das freie Endstück (111) des ersten Asts (11) der Klammer in die Öffnung (L) einzuführen, wobei die Längsachse (X) der Klammer deutlich auf die erste Abmessung (G) der Öffnung (L) ausgerichtet wird, um die Klammer (1) entlang ihrer Längsachse (X) in Richtung des freien Endstücks (111) des ersten Asts (11) zu verlagern, bis sich die den beiden Ästen (11, 12) gemeinsame Falte (10) gegenüber der Öffnung (L) befindet, um auf die Klammer eine Querkraft bezüglich der Wand (C) auszuüben, derart, dass die Falte (10) die Seite der zweiten Fläche (C2) der Wand passiert und dass sich die Klammer (1) entlang ihrer Längsachse (X) in Richtung der Falte (10) verlagert, bis die zweite Lasche (42) die Öffnung (L) durchdringt.

11. Verfahren nach Anspruch 10, **dadurch gekennzeichnet, dass** es des Weiteren die Arbeitsvorgänge umfasst, die darin bestehen, das zweite Verbindungselement (22) mit einem Befestigungsstück (Q) auf der Wand (C) zu verbinden und das zweite Verbindungselement (22), ausgehend von der ersten Fläche (C1) der Wand (C), durch die Bohrung (300) des Mittelbereichs (30) des Knopfs (3) der Klammer und durch die Öffnung (L) bis in das erste Verbindungselement (21), mit dem es sich verbindet, einzusetzen.
